# EUROPEAN PATENT APPLICATION

(11) **EP 4 311 980 A1**
(43) Date of publication of application: **31.01.2024**
(21) Application number: 23187822.4
(22) Date of filing: 26.07.2023
(51) Int. Cl.: F21V 9/14, G02B 5/30

(54) **STAGE PROJECTOR**

(30) Priority: 28.07.2022 IT 202200016026
(71) Applicant: CLAY PAKY S.R.L., 24068 Seriate (BG) (IT)
(72) Inventor: ALFIER, Alberto, 24068 SERIATE (BG) (IT); QUADRI, Aris, 24068 SERIATE (BG) (IT); FRISON, Renato, 24068 SERIATE (BG) (IT)
(74) Representative: Studio Torta S.p.A.

(57) **Abstract**

A stage projector (1) is described comprising a source device (3) configured to emit at least one linearly polarized overall light beam (4) and a manipulation device (15), which is arranged such to intercept at least a portion of the at least one overall light beam (4) and is configured to generate a substantially non-linearly polarized overall light beam (4).

## Description

### CROSS-REFERENCE TO RELATED APPLICATIONS

This patent application claims priority from Italian patent application no. 102022000016026 filed on July 28, 2022, the entire disclosure of which is incorporated herein by reference.

### TECHNICAL FIELD

The present invention relates to a stage projector.

### BACKGROUND OF THE INVENTION

In the entertainment sector, there are known stage projectors configured to obtain scenic effects by means of light beams. Stage projectors of this type are generally utilized in professional environments such as theatres, television studios, discos, stages for live events, shopping centers and much more.

A typical stage projector comprises a source device having a plurality of light sources for example having laser sources which emit a respective plurality of overall light beams preferentially having different wavelengths. The plurality of overall light beams is processed inside the projector such to generate a scenic light beam which is output from the stage projector.

The scenic light beam propagates in the space. During its propagation, the scenic light beam meets inhomogeneities such as dusts, drops of liquid (for example water, oil or the like). Thanks to the scattering phenomenon, such inhomogeneities enable the possibility to identify the path of the scenic light beam. In particular, the scattering phenomena are described by Mie scattering theory and Rayleigh scattering theory.

However, the intensity of the scattered beams strongly depends on the observation angle from which the scenic light beam is observed and on the point observed along the light beam.

The effect further depends on the wavelength. This means that the overall light beams of the scenic light beam having different wavelengths have different scattering characteristics.

This, in turn, entails that the scenic light beam is perceived, at least if observed from certain observation angles, as a light beam with an inhomogeneous coloring, despite the presence of mixing devices inside the projector.

The need is thus felt in the sector to manufacture stage projectors in which the above-mentioned drawbacks are minimized.

In particular, the need is felt in the sector to manufacture stage projectors which emit scenic light beams having a homogeneous coloring regardless of the observation angle and of the point observed along the light beam.

### DESCRIPTION OF THE INVENTION

The object of the present invention is to provide a stage projector capable of generating a scenic light beam having a homogeneous coloring regardless of the observation angle and of the point observed along the light beam.

The aforementioned object is achieved by the present invention, as it relates to a stage projector defined in the independent claim. Alternative preferred embodiments are protected by the respective dependent claims.

The stage projector according to the present invention comprises:
- a source device configured to emit at least one overall light beam; and
- a manipulation device, which is arranged such to intercept at least a portion of the at least one overall light beam and is configured to generate an overall light beam which is not linearly polarized.

In particular, the expression "non-linearly polarized" means in the context of the present invention: either a condition in which the output beam does not have one single linear polarization but two linear polarizations, substantially of the same intensity, overlapped and orthogonal to one another, or a condition in which the output light beam has a circular or elliptical polarization.

In this manner, a scenic light beam emitted by the stage projector is obtained which has a more homogeneous coloring, regardless of the observation angle and of the point observed along the beam.

According to some preferred embodiments, the source device can comprise a plurality of light sources, each of which can be configured to emit a respective single light beam having a defined wavelength and having substantially a linear polarization. The overall light beam can be defined by a combination of respective single light beams, preferentially each of the respective single light beams having substantially the same wavelength.

Preferentially, the manipulation device can be arranged in such a manner so as to intercept one or more single light beams for determining that the one or more single light beams intercepted by the manipulation device do not result linearly polarized

### BRIEF DESCRIPTION OF THE DRAWINGS

The present invention will now be described with reference to the accompanying drawings relative to non-limiting example embodiments, wherein:
- Figure 1 schematically illustrates a stage projector according to the present invention;
- Figure 2 schematically illustrates, with parts removed for clarity, a source device of the projector of Figure 1 according to a first embodiment;
- Figure 3 schematically illustrates, with parts removed for clarity, a source device of the projector of Figure 1 according to a second embodiment;
- Figure 4 schematically illustrates, with parts removed for clarity, a source device of the projector of Figure 1 according to a third embodiment; and
- Figure 5 schematically illustrates, with parts removed for clarity, a source device of the projector of Figure 1 according to a fourth embodiment.

### PREFERRED EMBODIMENTS OF THE INVENTION

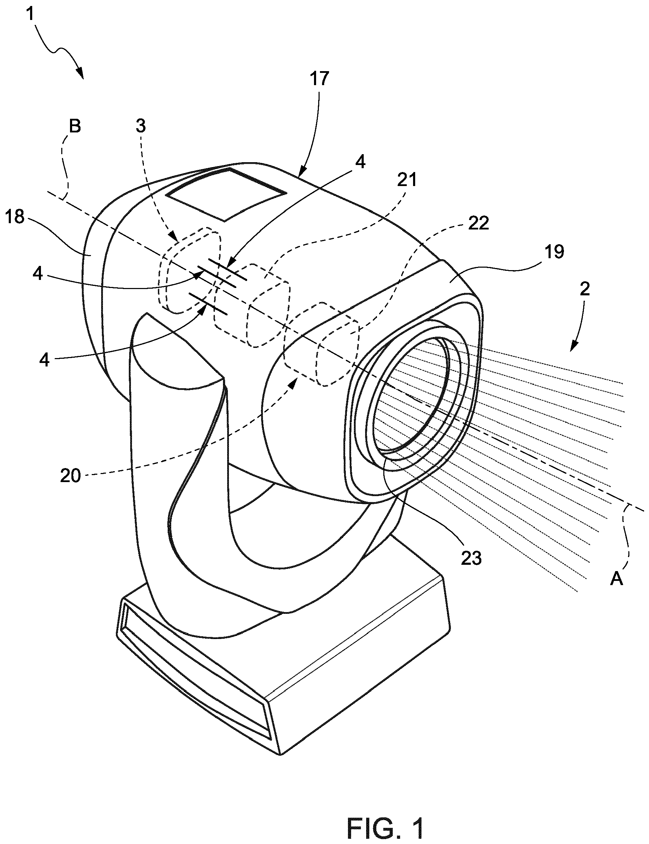

With reference to Figure 1, reference numeral 1 indicates, as a whole, a stage projector configured to emit at least one scenic light beam 2, in particular along a direction A. In particular, the stage projector 1 can extend along a longitudinal axis B.

In particular, the scenic light beam 2 propagates from the stage projector 1 along the direction A.

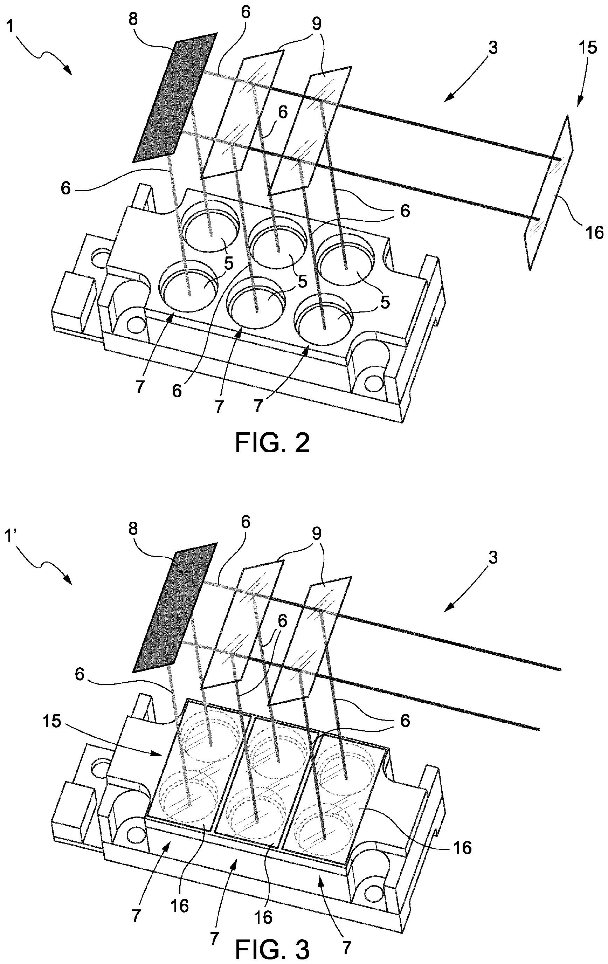

With particular reference to Figures 1 and 2, the stage projector 1 comprises at least one source device 3 configured to generate at least one overall light beam 4.

Preferentially, the source device 3 is configured to generate a plurality of overall light beams 4. In such case, the scenic light beam 2 can result from the combination of the plurality of overall light beams 4.

In particular, at least two overall light beams of the plurality of overall light beams 4 have different wavelengths. It should be noted that the two overall light beams 4 have respective different wavelengths when the respective wavelengths belong to different spectrums.

Preferentially, the source device 3 is configured to generate three overall light beams 4, among which one having a wavelength in the red spectrum, another one having a wavelength in the green spectrum and the last one having a wavelength in the blue spectrum.

Preferentially, each overall light beam 4 propagates along a respective propagation path.

More specifically, each source device 3 can comprise one or more light sources 5, in particular laser sources, each configured to emit a respective single light beam 6. Preferentially, the single light beam 6 has substantially a respective given wavelength.

More specifically, each light source 5 can be configured to emit a single light beam 6 which has substantially a given wavelength. In particular, in the present context, the expression "substantially a given wavelength" indicates that the single light beam 6 has a wavelength distributed in a neighborhood, preferentially sufficiently small, of a given wavelength of reference. In other words, each light source 5 can be configured to emit a respective single light beam 6 substantially monochromatic.

Essentially, the term "substantially" indicates that the light sources 5 are not ideal sources, but real sources. In fact, an ideal source could emit a single light beam 6 having a single wavelength, for obtaining a monochromatic single light beam 6. However, the light sources 5 are light sources 5 which have a certain distribution of the wavelengths around a given wavelength. The single light beam 6 obtained by means of real sources is thus a light beam which is not completely monochromatic, but "substantially" monochromatic.

Preferentially, each overall light beam 4 can comprise and/or can be defined by one single respective single light beam 6 or by a combination of more single light beams 6.

Preferentially, the single light beams 6 composing the overall light beam 4 have substantially the same wavelength (i.e. the respective wavelength is substantially distributed in a neighborhood, preferentially sufficiently small, of a given wavelength of reference).

Furthermore, each light source 5 can be configured to emit a respective single light beam 6 having substantially a linear polarization.

It should be noted that the expressions "substantially linear polarization" and "substantially a linear polarization" indicate that the single light beam 6 can have a first component having linear polarization and a second component having a linear polarization perpendicular to the first component when the first component has a greater intensity than the second component. In particular, the second component has a negligible intensity with respect to the first component. In other words, the polarization of the single light beam 6 can be given by the sole first component.

It should be noted that the light sources 5 which can provide a single light beam 6 with substantially a linear polarization (such as for example the laser sources) intrinsically emit single light beams 6 with a respective first component and a respective second component which however is negligible with respect to the first component.

Additionally, the respective polarizations of the single light beams 6 can be substantially linear and have the same orientation.

More specifically, the source device 3 can comprise at least one group of sources 7, in particular a plurality of groups of sources 7. Each group of sources 7 comprises a plurality of light sources 5, each configured to generate a respective single light beam 6.

Preferentially, the wavelength of each single light beam 6 emitted by the light sources 5 of a same group of sources 7 is (substantially) identical (i.e. the wavelengths belong to the same spectrum and/or are distributed in a neighborhood, preferentially sufficiently small, of a wavelength of reference).

Still more preferentially, the wavelengths of the respective single light beams 6 of a group of sources 7 can be different with respect to the wavelengths of the single light beams 6 of another group of sources 7. In this manner it is possible to obtain a mix of colors. In other words, a group of sources 7 emits single light beams 6 in a first spectrum, whereas another group of sources 7 emits single light beams 6 in another spectrum different from the first spectrum.

In the specific case illustrated in Figure 2, the source device 3 comprises three groups of sources 7, in particular a first group of sources 7 comprising light sources 5 configured to generate single light beams 6 having substantially a first wavelength (in particular in the red spectrum), a second group of sources 7 comprising light sources 5 configured to generate single light beams 6 having substantially a second wavelength (in particular in the green spectrum) and a third group of sources 7 comprising light sources 5 configured to generate single light beams 6 having substantially a third wavelength (in particular in the blue spectrum).

According to some preferred embodiments, the source device 3 can also comprise a mixing unit configured to combine the single light beams 6 in such a manner that the overall light beams 4 result from the overlapping of the single light beams 6.

With particular reference to Figure 2, source device 3 can also comprise a plurality of mirrors 8 and 9, each associated with one or more light sources 5 and each configured to intercept and reflect the respective single light beams 6, in particular toward the mixing unit. Preferentially, the mirrors 9 can be of the dichroic type.

Preferentially, each mirror 8 and 9 can be associated with one or more respective light sources 5, in particular with a respective group of sources 7 for reflecting the single light beams 6 emitted by the respective light sources 5.

Preferentially, each one of the mirrors 8 and 9 can be configured to reflect single light beams 6 having substantially the same wavelength.

Advantageously, the stage projector 1 can comprise a manipulation device 15, which is arranged such to intercept at least a portion of each overall light beam 4 and is configured to generate a non-linearly polarized overall light beam 4.

In this manner it is possible to decrease the influence that the observation angle can have on the perception of an observer relative to the colors of the scenic light beam 2. In particular, the color of the scenic light beam 2 results to be more homogeneous. In other words, the dependence on the observation angle and on the point observed is decreased.

It should be noted that according to the embodiment of Figures 2 and 3, the manipulation device 15 is configured to determine a substantially circular or elliptical polarization of each overall light beam 4.

It should be noted that the expression "substantially circular or elliptical" means the condition in which a majority component of the overall light beam 4 has a circular or elliptical polarization, and possible other components are negligible.

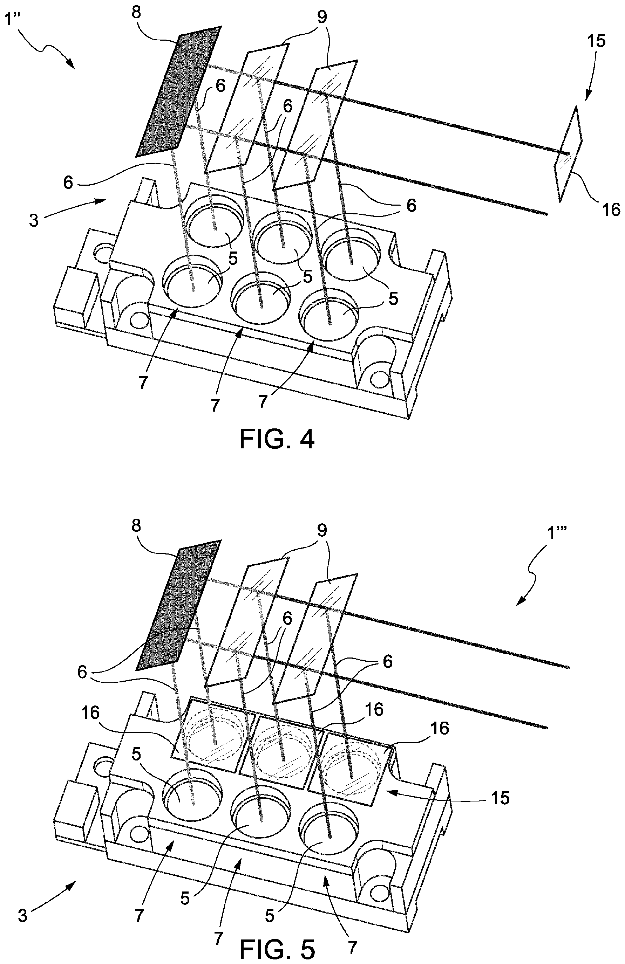

Whereas, in the case of the embodiments of Figures 4 and 5, the manipulation device 15 is configured to modify the orientation of the respective substantially linear polarization by at least one single light beam 6 in such a manner that each overall light beam 4 comprises at least one respective first single light beam 6 and at least one respective second single light beam 6, both having substantially a linear polarization. Also in this case a respective non-linearly polarized overall light beam 4 is obtained; in fact, the overall light beam 4 comprises two linear polarizations, substantially of the same intensity, overlapped and orthogonal to one another.

In particular, in the context of the present application, an overall light beam 4 resulting from the combination of at least two single light beams 6, each having a substantially linear polarization, but with different orientations (for example displaced by a given angle, preferentially by 90°) is to be considered a substantially non-linearly polarized overall light beam 4.

More specifically, an overall light beam 4 resulting from the combination of at least two single light beams 6, each having a substantially linear polarization, but with different orientations, can result to be substantially non-polarized (i.e. linearly non-polarized based on what mentioned above) due to the randomness with which the at least two single light beams 6 combine.

In the specific case of the embodiment of Figure 2, the manipulation device 15 can be arranged to intercept each single light beam 6 having substantially a linear polarization and transform it into a substantially circular or elliptical polarization. This means that automatically also the respective overall light beams 4 result to be substantially non-linearly polarized.

Furthermore, the modification of the polarization of the single light beams 6 into substantially a circular or elliptical polarization, also determines the substantially circular or elliptical polarizations of each one of the overall light beams 4.

More specifically, the manipulation device 15 can comprise at least one wave plate 16 arranged to intercept at least portions of each overall light beam 4 and to modify the substantially polarization linear of each overall light beam 4.

In particular, the wave plate 16 is an optical device configured to alter the polarization of a light wave (i.e. the overall light beams 4 and/or the single light beams 6) passing through it.

Still more specifically, the wave plate 16 can comprise an anisotropic material, in particular birefringent.

In the embodiment of Figure 2, the wave plate 16 can be arranged in such a manner so as to intercept and modify the respective polarizations of each one of the single light beams 6.

In particular, the wave plate 16 can be interposed between the light sources 5 and the mixing unit.

Alternatively, the mixing unit can be interposed between the light sources 5 and the wave plate 16. In this case, the polarizations of the single light beams 6 are modified after the formation of the respective overall light beams 4.

Still more in particular, the wave plate 16 can be interposed between the plurality of mirrors 8 and 9 and the mixing unit or the mixing unit can be interposed between the wave plate 16 and the plurality of mirrors 8 and 9.

Still more specifically, the wave plate 16 can be a quarter-wave plate for determining the polarization of the overall light beam 4, in particular for modifying the polarization of the single light beams 6 from a substantially linear polarization to a substantially circular or elliptical polarization.

More specifically and with particular reference to Figure 1, the stage projector 1 can also comprise a casing 17, a supporting support (not illustrated) configured to support the casing 17 and a handling mechanism (not illustrated) to handle the casing 17 with respect to the supporting support, in particular to modify the direction A.

In particular, the source device 3 which preferentially comprises the single sources 5 and/or the plurality of mirrors 8 and 9 and/or the mixing unit and/or the manipulation device 15 can be housed in the casing 17.

Preferentially, the casing 17 can extend along the longitudinal axis B.

Still more specifically, the casing 17 can also comprise a first closed end 18 and/or a second open end 19, in particular opposite the first end 18. Preferentially, the first end 18 and the second end 19 can be spaced apart from one another along the longitudinal axis B.

Furthermore, the stage projector 1 can also comprise an optical device 20, in particular housed in the casing 17 and, configured to intercept each overall light beam 4 and to allow the output of the scenic light beam 2 from the stage projector 1.

Preferentially, the optical device 20 can comprise and/or define a projection lens.

In particular, the source device 3 can be interposed between the first end 18 and the optical group 20.

According to some preferred non-limiting embodiments, the manipulation device 15, in particular the wave plate 16, can be interposed between the light sources 5 and the optical device 20.

More specifically, the optical device 20 can comprise:
- a collimation group 21 configured to minimize the divergence of each overall light beam 4 and/or each single light beam 6;
- a focusing group 22 configured to intercept each overall light beam 4 and/or each single light beam 6 being output from the collimation device 21 and focus it on an opening (Gate), preferentially at the Gobo plane, which will result to be lightened uniformly; and
- preferentially, at least one output lens 23 arranged at the second end 19 and configured to receive the overall light beams 4, preferentially being output from the Gate, so as to form the scenic light beam 2 for allowing the scenic light beam 2 to be output from the stage projector 1.

Preferentially, the focusing group 22 can be movable and/or can comprise movable components for adjusting the focusing of the overall light beam(s) 4.

With particular reference to Figure 3, reference numeral 1' indicates a stage projector (only partly illustrated in Figure 3) in accordance with a second embodiment. The stage projector 1' is similar to the stage projector 1. In the following, the differences between the stage projector 1' and the stage projector 1 are described, using the same reference numerals for identical or similar parts.

In particular, the stage projector 1' differs from the stage projector 1 for the fact that the manipulation device 15 comprises a plurality of delay plates 16, preferentially of the quarter-wave plate type and is configured to modify the polarization from a substantially linear polarization to a substantially circular or elliptical polarization.

Preferentially, each wave plate 16 can be arranged in such a manner so as to intercept only some of the single light beams 6, in particular only single light beams 6 of the (substantially) same wavelength (which belong to the same spectrum).

More specifically, each wave plate 16 can be associated with one or more respective light sources 5, two in the specific illustrated case, in such a manner so as to intercept and modify the polarization of the respective single light beams 6. Preferentially, the wave plate 16 does not intercept all the light sources 5, but only some of them.

In the specific case illustrated in Figure 3, each wave plate 16 is associated with two respective light sources 5 and is configured to intercept the respective single light beams 6.

Preferentially, each wave plate 16 can be interposed between the respective light source(s) 5 and the respective mirror 8 or the respective mirrors 9.

According to some possible embodiments, each wave plate 16 can be in contact with, in particular applied onto, at least one respective light source 5.

With particular reference to Figure 4, reference numeral 1" indicates a stage projector (only partly illustrated in Figure 4) in accordance with a third embodiment. The stage projector 1" is similar to the stage projector 1. In the following, the differences between the stage projector 1" and the stage projector 1 are described, using the same reference numerals for identical or similar parts.

In particular, the stage projector 1" differs from the stage projector 1 for the fact that the manipulation device 15 comprises at least one half-wave plate (which defines the respective wave plate 16).

More specifically, the half-wave plate can rotate the substantially linear polarization (in particular determined by the majority component) of a single light beam 6 by a given angle, preferentially by 90°.

In particular, according to the third embodiment of Figure 4, each overall light beam 4 of a defined wavelength comprises at least one respective first single light beam 6, in particular having the respective defined wavelength, and a respective second single light beam 6, in particular of the (substantially) same respective defined wavelength.

Preferentially, the source device 3 can emit at least two overall light beams 4 having different defined wavelengths (i.e. the respective defined wavelengths belong to different spectrums and/or the wavelengths are distributed around different defined wavelengths).

The manipulation device 15, in particular the respective wave plate 16, still more in particular the half-wave plate, can be arranged in such a manner so as to intercept each first single light beam 6 and can be configured to modify the respective substantially linear polarizations, preferentially for rotating them by a given angle, preferentially by 90°.

Furthermore, the manipulation device 15, in particular the respective wave plate 16, still more in particular the half-wave plate, can be arranged in such a manner so as to not intercept any one of the second single light beams 6, in particular to not interact with the second single light beams 6 and to not modify the respective substantially linear polarizations.

It should be noted that according to these embodiments, the respective polarizations of the first single light beams 6 are rotated by the given angle and remain substantially linear. However, considering the fact that the polarizations of the respective second single light beams 6 remain unvaried, respective non-linearly polarized overall light beams 4 are obtained. This because at least one single light beam 6 of each overall light beam 4 has substantially a linear polarization with an orientation which is different from at least another single light beam 6 of the overall light beam 4.

It should be noted that the Applicant found that the scenic light beam 2 emitted from the stage projector 1" enables an improvement in terms of color homogeneity perceived upon the varying of the observation angle which seems to be less with respect to the color homogeneity of the light beams 2 obtained with the embodiments of Figures 2 and 3. However, the outcomes are very satisfactory and the use of a half-wave plate entails a minor cost compared to a quarter-wave plate.

With particular reference to Figure 5, reference numeral 1‴ indicates a stage projector (only some details of the stage projector 1‴ are illustrated in Figure 5) in accordance with a fourth embodiment. The stage projector 1‴ is similar to the stage projector 1". In the following, the differences between the stage projector 1‴ and the stage projector 1" are described, using the same reference numerals for identical or similar parts.

In particular, the stage projector 1‴ differs from the stage projector 1" in the fact that the manipulation device 15 comprises a plurality of delay plates 16 of the half-wave plate type.

Furthermore, the source device 3, in particular each group of sources 7, can comprise at least two light sources 5 for each wavelength; i.e. at least two light sources 5 emit respective single light beams 6 of the substantially same wavelength.

Furthermore, each wave plate 16 can be associated only with a fraction of the respective light sources 5 of each group of sources 7.

Furthermore, each wave plate 16 can be arranged to intercept at least one single light beam 6 of a specific defined wavelength, and in particular to not intercept at least another single light beam 6 having the same specific defined wavelength.

In the specific illustrated case, each overall light beam 4 of a specific defined wavelength is generated by two single light beams 6, each emitted by a respective light source 5. Whereas, the respective wave plate 16 intercepts one of the two single light beams 6, the other one is not intercepted. Therefore, a respective overall light beam 4 formed by two single light beams 6 is obtained with different orientations of the respective linear polarizations; i.e. the respective overall light beam 4 results to be non-linearly polarized.

In particular, each wave plate 16 can be interposed between the respective light source(s) 5 and a respective mirror 8 or 9.

Finally, it is evident that modifications and variations can be made to the projectors 1, 1', 1" and 1‴ described and illustrated herein, which do not depart from the scope of protection defined by the claims.

## Claims

1. Stage projector (1) comprising:
- a source device (3) configured to emit at least one overall light beam (4); and
- a manipulation device (15), which is arranged such to intercept at least a portion of the at least one overall light beam (4) and being configured to generate an overall light beam (4), which does not have a linear polarization.

2. Stage projector according to claim 1, wherein the source device (3) comprises a plurality of light sources (5), each being configured to emit a respective single light beam (6) having substantially a defined wavelength and having substantially a linear polarization;
wherein the overall light beam (4) is defined by a combination of respective single light beams (6).

3. Stage projector according to claim 2, wherein the manipulation device (15) is arranged such to intercept one or more single light beams (6) for modifying the polarization of the one or more single light beams (6) and determining a substantially non-linearly polarized overall light beam (4);

4. Stage projector according to claim 3, wherein the manipulation device (15) is arranged such to intercept each single light beam (6) so as to modify the polarization of each single light beam (6).

5. Stage projector according to any one of the preceding claims, wherein the manipulation device (15) is configured to determine substantially a circular or elliptical polarization of the overall light beam (4).

6. Stage projector according to any one of the preceding claims, wherein the manipulation device (15) comprises a quarter-wave plate (16) configured to determine substantially a circular or elliptical polarization of the overall light beam (4).

7. Stage projector according to any one of claims 1 to 3, wherein the source device (3) comprises at least a first light source (5) configured to emit at least a first single light beam (6) having substantially a linear polarization and substantially a first defined wavelength and at least a second light source (5) configured to emit a second single light beam (6) having substantially a linear polarization and a second defined wavelength substantially equal to the first defined wavelength;
wherein the overall light beam (4) is formed by at least the first single light beam (6) and the second single light beam (6);
wherein the manipulation device (15) is arranged in such a manner so as to intercept the first single light beam (6) and is configured to modify the substantially linear polarization of the first single light beam (6);
wherein the manipulation device (15) is arranged in such a manner so as not to intercept the second single light beam (6).

8. Stage projector according to claim 7, wherein the manipulation device (15) is arranged such to intercept the first single light beam (6) and is configured to rotate the substantially linear polarization of the first single light beam (6) by a given angle, preferentially by 90°.

9. Stage projector according to claim 7 or 8, wherein the manipulation device (15) comprises a half-wave plate (16) arranged such to intercept the first single light beam (6) and configured to modify the substantially linear polarization of the first single light beam (6) by a given angle, preferentially by 90°.

10. Stage projector according to any one of claims 7 to 9, wherein the source device (3) is configured to emit a first group of single light beams (6) having a substantially linear polarization; wherein the first group of single light beams (6) comprises at least a first single light beam (6) having substantially a first wavelength and a second single light beam (6) having substantially a second wavelength different from the first wavelength;
wherein the source device (3) is configured to emit a second group of single light beams (6) having a substantially linear polarization and comprising at least a third single light beam (6) having substantially the first wavelength and at least a fourth single light beam (6) having substantially the second wavelength;
wherein the manipulation device (15) is configured to and is arranged such to intercept the single light beams (6) of the first group, but not of the second group, and to modify the polarization of the first single light beam (6) and of the second single light beam (6) of the first group.

11. Stage projector according to any one of the preceding claims, wherein the source device (3) comprises a plurality of laser light sources, each one configured to emit a respective single light beam (6).

12. Stage projector according to any one of the preceding claims, comprising an optical device (20) configured to intercept the overall light beam (4) and to allow for the outlet of a scenic light beam (2) from the stage projector (1);
wherein the manipulation device (15) is interposed between the one or more light sources (5) of the source device (3) and the optical device (20).

13. Stage projector according to claim 12, wherein the optical device (20) comprises:
- a collimation group (21) configured to minimize the divergence of the at least one overall light beam (4); and
- a focusing group (22) which intercepts the overall light beam (4) from the collimation device (21) and focuses it on an opening of the stage projector (1).
